# EUROPEAN PATENT APPLICATION

(11) **EP 2 457 717 A1**
(43) Date of publication of application: **30.05.2012**
(21) Application number: 11191198.8
(22) Date of filing: 29.11.2011
(51) Int. Cl.: B29C 65/20, E06B 3/96, B29C 65/78

(54) **Welding machine with two welding heads for profiles made of plastic material, particularly for the production of door and window frames**

(30) Priority: 30.11.2010 IT PD20100362
(71) Applicant: Profteq S.r.l., 35010 Villa del Conte PD (IT)
(72) Inventor: Schiavo, Giuseppe, 35015 Galliera Veneta PD (IT)
(74) Representative: Modiano, Micaela Nadia

(57) **Abstract**

Welding machine (10) with two welding heads for profiles made of plastic material, of the type comprising a footing (11) which supports two assemblies (12, 13) for the corner welding of profiles made of plastic material, at least one of the assemblies (12, 13) being able to slide on a corresponding guide (14) defined on the footing (11), each welding assembly (12, 13) comprising
- means (15) for the support and positioning of a first portion of profile (16), or cross-member, which is arranged substantially between the two assemblies,
- means (17) for the support and positioning of a second portion of profile, or upright (18, 19), each assembly supporting a corresponding second portion or upright, which is arranged transversely to the first portion (16),
- means (20) for the corner welding of one end (16a, 16b) of the first portion with a corresponding end (18a, 19a) of the respective second portion (18, 19),
- means for their movement being associated with the support and positioning means (15, 17) and being adapted to allowthe linear advancement, without rotation, of a C-shaped blank (21) from a first side (10a) of the machine (10) to its second, opposite side (10b), and the subsequent positioning of a fourth portion of profile (22) or second cross-member, for closing a quadrangular frame (23),
- the corner welding means (20) being supported by movement means which allow their operation on different vertical welding planes.

## Description

The present invention relates to a welding machine with two welding heads for profiles made of plastic material, particularly for the production of door and window frames.

Nowadays welding machines are known with two heads for the joining of profiles made of plastic material, which generally comprise the following elements:
- a welded steel frame that acts as a footing, of length, by way of non-limiting example, between four and ten meters,
- two welding heads, i.e. two assemblies for the corner welding of two profiles made of plastic material, of which a first welding head is called, in jargon, "fixed", and the second is called "movable" or "slideable".

Generally the fixed head is located at one of the ends of the footing while the movable head performs a translational motion on guides until it is positioned at a distance adapted to loading a first portion of profile for the provision of a preset type of angle join.

The welding assemblies supported by each one of the heads, both fixed and movable, are provided with movable parts, adapted to be moved automatically or manually shifted by an operator, in order to implement the various successive steps of the welding method, i.e. the insertion of individual profiles made of plastic material to be welded to each other, the squaring, i.e. the mutual positioning, the welding and the extraction of the welded pieces.

Such welding machines, although widespread and appreciated, display some room for improvement.

In fact, conventional machines with two heads for the corner welding of profiles made of PVC require the pieces to be welded and the welded pieces to always be moved from one side of the machine only.

For example, the operator first of all positions three portions of PVC profile between the two welding heads, so as to define a substantially C-shaped blank of a frame of a window or door frame or the like, in order to perform a double welding operation, a first operation performed by the first welding head to join a first end of a first cross-member, arranged between the heads, with a first end of a first upright, while the second welding operation is performed by the second welding head, so as to join the second end of the first cross-member with the first end of a second upright. The resulting C-shaped blank is removed by the operator from the same side of the machine, is rotated and then repositioned between the two welding heads for the join with the second cross-member, previously positioned between the two heads, for closing the C-shaped blank, so as to define a quadrangular frame.

Such method of working, although commonly employed, presents various drawbacks for the operator, who has to move the C-shaped blank and carry it away from the machine, place it in a storage system for blanks in order to position the final cross-member between the heads of the machine, then go and retrieve the C-shaped blank from the storage system and reposition it for the second double welding operation for the completion of the quadrangular frame.

All this implies physical labor by the operator, which may be not inconsiderable and actually require more than one operator in the case of door and window frames of particularly large dimensions, together with the space taken up for the storage system for the blanks, which is also proportional to the dimensions of the blank.

In addition, for quadrangular frames of unusual dimensions, it often happens that the operator, in order to be able to perform the correct positioning of the final piece for closing the quadrangular frame, finds him or herself within the space delimited by the frame itself, also in order to support the C-shaped blank produced by the first step of welding the frame and keep it in a steady position for work.

Such situation with the operator within the quadrangular frame carries risks in the event of automated movements of the frame, in addition to constituting an ergonomically disadvantageous factor, i.e. one of great discomfort for the operators who have to enter and exit from the quadrangular frame that is being completed by passing thereunder.

The aim of the present invention is to provide a welding machine with two welding heads for profiles made of plastic material, particularly for the production of door and window frames, that is capable of overcoming the above mentioned drawbacks of the conventional machines.

Within this technical aim, an object of the invention is to provide a machine that enables the operator to work without unusual physical effort in total safety.

Another object of the invention is to provide a machine that makes it possible to eliminate the storage system for the blanks.

Another object of the invention is to provide a machine that makes it possible to speed up the production cycle of a quadrangular frame by eliminating the intermediate operations of manually moving the C-shaped blanks and of placing them in a storage system.

Another object of the invention is to provide a welding machine with two welding heads for profiles made of plastic material, with functionality, efficiency and lifetime not less than those of conventional machines.

Another object of the invention is to provide a welding machine with two welding heads for profiles made of plastic material that can be made using known systems and technologies.

This aim and these and objects, as well as others that will become better apparent hereinafter, are achieved by a welding machine with two welding heads for profiles made of plastic material, of the type comprising a footing which supports two assemblies for the corner welding of profiles made of plastic material, at least one of said assemblies being able to slide on a corresponding guide defined on said footing, said machine being characterized in that each welding assembly comprises
- means for the support and positioning of a first portion of profile,
- means for the support and positioning of a second portion of profile,
- means for the corner welding of one end of said first portion with a corresponding end of said second portion,
- means for their movement being associated with said support and positioning means and being adapted to allow the linear advancement, without rotation, of a C-shaped blank from one side of the machine to its opposite side, and the subsequent positioning of a fourth portion of profile, for closing a quadrangular frame,
- said corner welding means being supported by movement means which allow their operation on a vertical welding plane different from the previous one.

Further characteristics and advantages of the invention will become better apparent from the description of a preferred, but not exclusive, embodiment of the welding machine according to the invention, which is illustrated by way of non-limiting example in the accompanying drawings wherein:
- Figure 1 is a schematic view from above of a machine according to the invention in a first step of operation;
- Figure 2 is a schematic view from above of a machine according to the invention in a second step of operation;

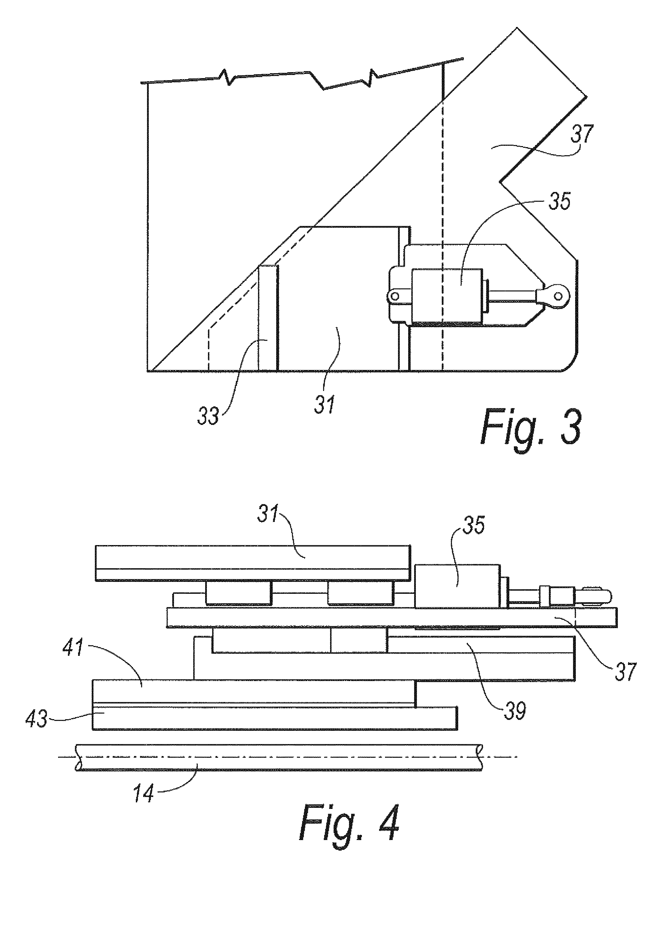

- Figure 3 is a view of a detail of the machine according to the invention;
- Figure 4 is a front view of the detail in Figure 3;
- Figure 5 is a side view of the detail in Figure 3;
- Figure 6 is a schematic view from above of a machine according to the invention in a third step of operation thereof;
- Figure 7 is a schematic view from above of a machine according to the invention in a fourth step of operation thereof;
- Figure 8 is a sectional side view of the movement means;
- Figure 9 is a view from below of the movement means.

With reference to the figures, a welding machine with two welding heads for profiles made of plastic material according to the invention is generally designated with the reference numeral 10.

The welding machine 10 is of the type comprising a footing 11 which supports two assemblies, 12 and 13 respectively, for the corner welding of profiles made of plastic material.

Generally, at least one of the assemblies 12, 13 is able to slide on a corresponding guide 14, in this example defined by two parallel bars, defined substantially along all the footing 11. In the embodiment described herein it should be understood that the first assembly 12 can perform a translational movement of a few centimeters, for adjustment movements, while the second assembly 13 is free to move throughout the length of the guide 14.

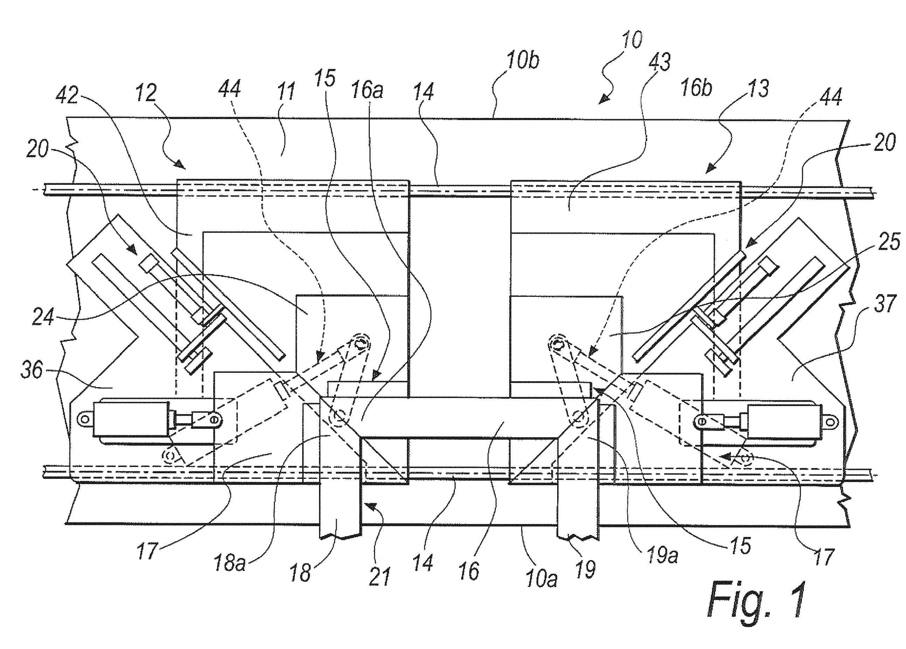

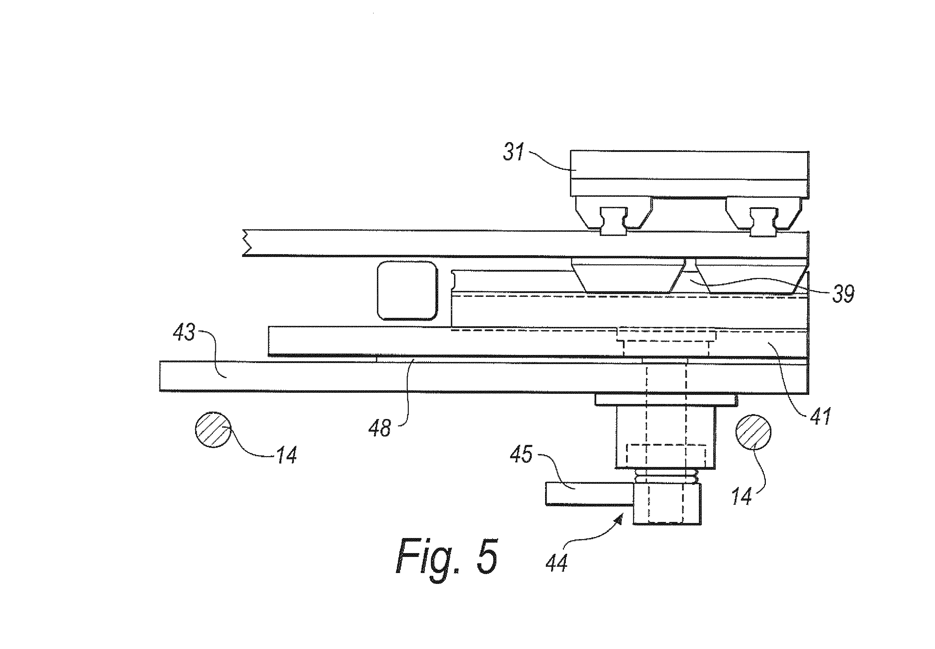

Each welding assembly 12 and 13 comprises:
- means 15 for the support and positioning of a first portion of profile 16, or cross-member, which is arranged substantially between the two assemblies,
- means 17 for the support and positioning of a second portion of profile, or upright, 18 or 19, each assembly supporting a corresponding second portion or upright, thus, as in Figures 1, 2, 5 and 6, the first assembly 12 supports a corresponding second portion of profile 18 while the second assembly 13 supports a further second portion of profile 19;
- means 20 for the corner welding of one end 16a or 16b of the first portion 16 with a corresponding end 18a or 19a of the respective second portion 18 or 19.

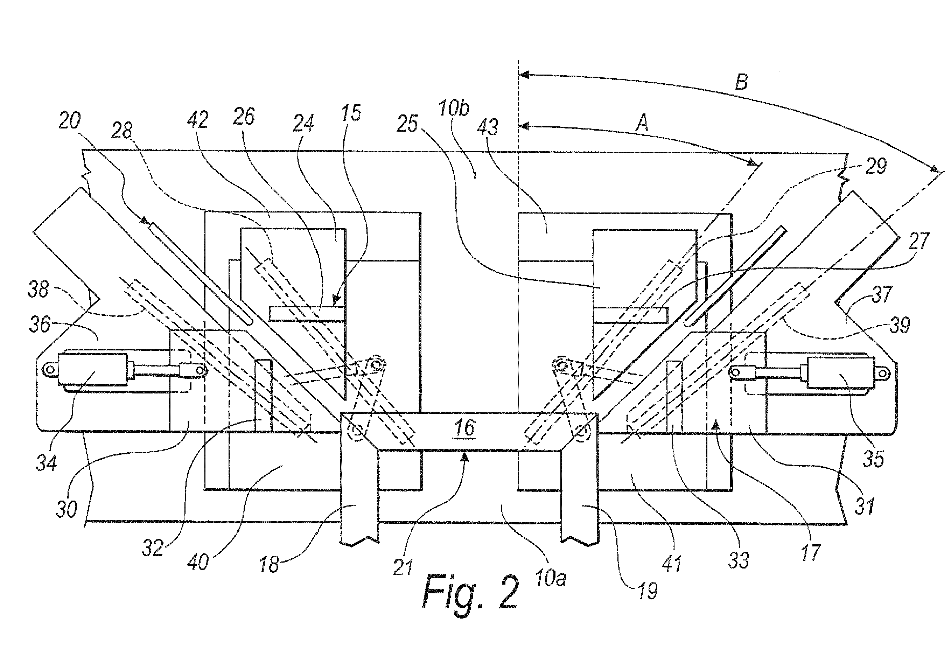

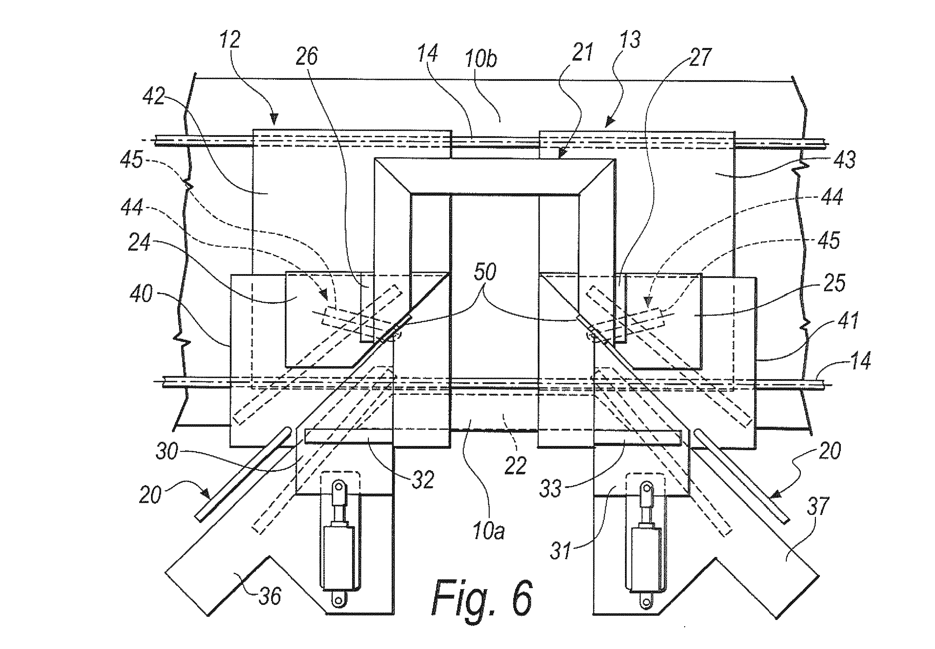

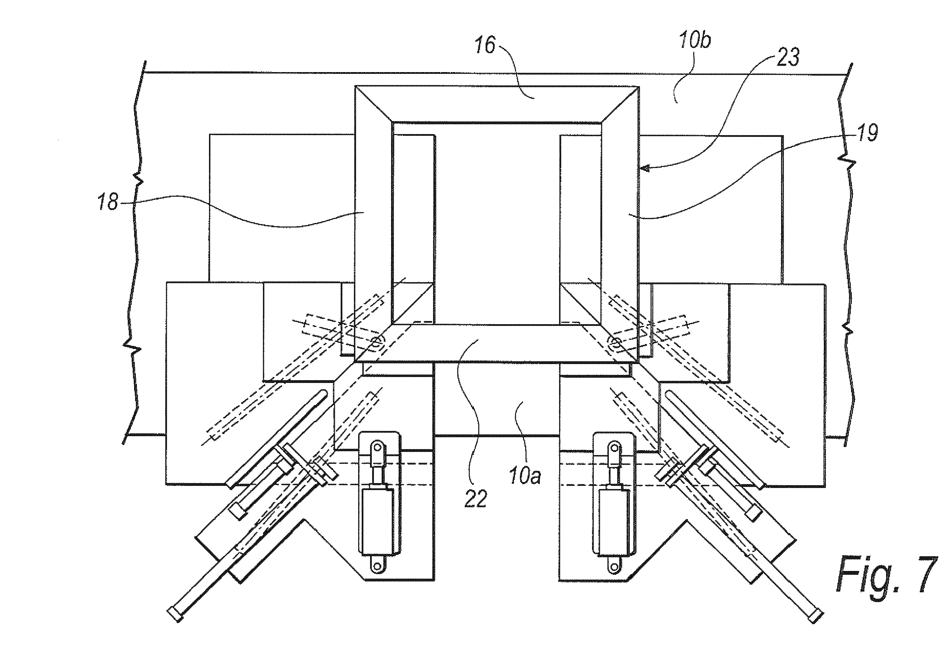

The means 15 and 17 for support and positioning of the portions of profile are associated with movement means, better described hereinbelow, that are adapted to allow the linear advancement, i.e. without rotation, of the C-shaped blank 21, produced by welding the first portion 16 with the second portions 18 and 19, as in Figures 1 and 2, from a first side 10a of the machine 10 to its second, opposite side 10b, and the subsequent positioning of a fourth portion of profile, or second cross-member, 22, visible in Figures 6 and 7, for closing a quadrangular frame 23, shown complete in Figure 7.

In order to achieve the welding of the fourth piece 22 to the second portions 18 and 19, the means 20 for corner welding are supported by movement means which allow their operation on different vertical welding planes, and in particular on welding planes arranged at 90° with respect to the planes on which the welding is performed of the first portion 16 with the second portions 18 and 19.

In the embodiment of the machine 10 according to the invention described herein by way of non-limiting example of the invention, the means 15 for the support and positioning of a first portion 16 are constituted, for each one of the two assemblies 12 and 13, by a first movable deck 24 and 25 respectively.

Each one of the first movable decks 24 and 25 supports a first abutment, 26 and 27 respectively, against which the long side of the first portion of profile 16 is to be arranged.

The first movable deck 24 and 25, clearly visible in Figure 2, is arranged so as to slide on a first linear guide 28 and 29 which is extended along a direction which is oriented at a first angle A, for example 40°, with respect to a reference plane that is perpendicular to the direction of motion of the assemblies 12 and 13 that is defined by the guides 14.

The first guide 28 and 29 makes it possible, with the retraction of the corresponding first movable deck 24 or 25 from its configuration for the first welding operation, i.e. the welding of the first portion 16 with the two second portions 18 and 19, to also obtain a lateral movement of that same first movable deck.

The retraction of the first movable decks 24 and 25 on the respective first guides 28 and 29 produces a lateral movement of the first movable decks 24 and 25 that is such as to enable the passage of the C-shaped blank 21 from the first side 10a to the second, opposite side 10b of the machine 10.

The means 17 for the support and positioning of a second portion of profile 18 or 19 are constituted, for each welding assembly 12 and 13, by a second movable deck, 30 and 31 respectively, which are also clearly visible in Figure 2.

The second movable deck 30, like 31, supports a second abutment 32 and 33 respectively, which is oriented at right angles to the first abutments 26 and 27 of the first movable decks 24 and 25, against which the long side of the corresponding second portion of profile 18 or 19 is to be positioned.

The second movable deck 30, like 31, is moved, in a direction which is substantially parallel to the direction defined by the guides 14, by a corresponding actuator 34 and 35.

The second movable deck 30 and 31 slides on an underlying plate for supporting accessories 36 and 37 respectively, which in addition to supporting the second movable deck also supports the welding means 20.

Each one of the accessory supporting plates 36 and 37 is arranged so as to perform a translational motion on a corresponding second linear guide 38 and 39 which is extended along a direction which is oriented at a second angle B, which is greater than the first angle A, for example if A is 40° then B is 60°, with respect to a reference plane that is perpendicular to the direction of motion of the assemblies 12 and 13 that is defined by the guides 14.

The first guides 28 and 29 for the first movable decks 24 and 25, and the second guides 38 and 39 for the accessory supporting plates 36 and 37 are fixed to a rotatable base 40 and 41 respectively.

The rotatable bases 40 and 41 are in turn coupled rotatably to a corresponding fixed base 42 and 43 respectively.

The fixed bases 42 and 43 of the assemblies 12 and 13 are the parts made to slide on the guides 14.

The movement means for the support and positioning means 15 and 17 as described above, adapted to allow the linear advancement, i.e. without rotation, of the C-shaped blank 21, and the subsequent operations for positioning and welding of a fourth portion of profile 22 to complete a quadrangular frame 23, are constituted, in the present embodiment of the invention, by means 44 for the rotation of the rotatable bases 40 and 41 with respect to the fixed bases 42 and 43.

Such rotation, shown clearly in Figures 6 and 7, is through 90°.

The means 44 for rotation comprise, for each rotatable base 40 and 41, a lever 45 for the rotation of a pivot 46 which is fixed on the opposite side with respect to the rotatable base 40 or 41.

An antifriction plate 48 is interposed between the rotatable base and the corresponding fixed base

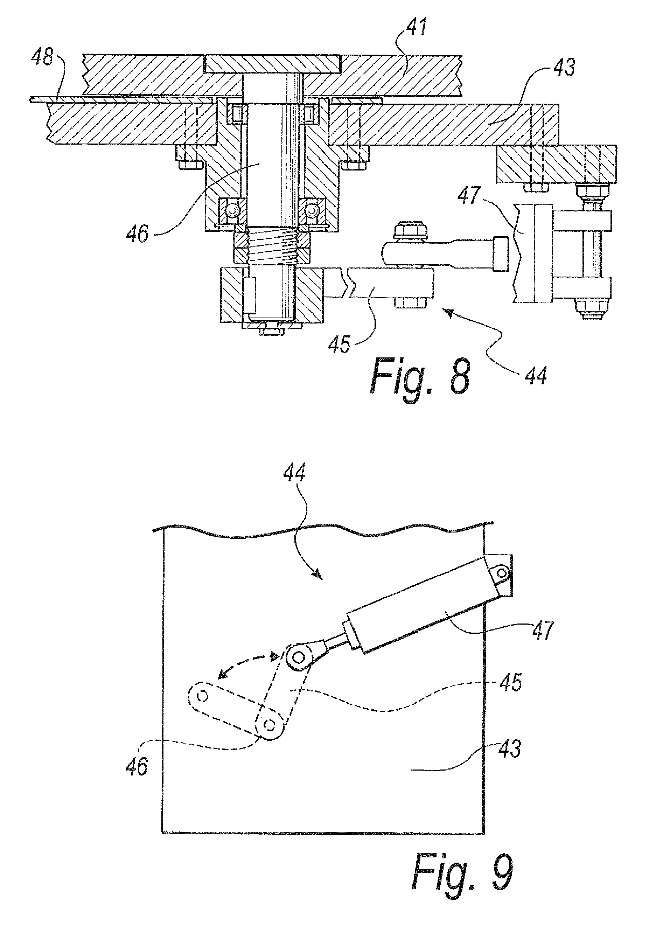

The lever 45 is understood to be rotatable either manually or by way of an actuator 47, as shown in Figures 8 and 9.

It should be understood that the actuator 47, shown as being fluid-dynamic, can also be of another type, for example electrical.

The movement means for the means 20 for corner welding, which allow their operation on different vertical welding planes, are constituted by the rotation means 44, which together with the rotatable bases 40 and 41 also turn the accessory supporting plates 36 and 37 and indeed the welding means 20 supported thereby, welding means which should be understood as being of known type.

Operation of the machine 10, according to the invention, is the following.

Figure 1 schematizes the machine 10 with the first movable decks 24 and 25, and second movable decks 30 and 31, positioned to hold the three pieces 16, 18 and 19 following a first welding operation.

Then, as shown by way of example in Figure 2, the movable decks with the respective first abutments 26 and 27, and second abutments 32 and 33, as well as with the welding means 20, retreat along divergent trajectories defined by the angles of the respective first guides 28 and 29, and second guides 38 and 39.

In each step the C-shaped blank 21 or the final frame 23 are understood to be supported by adapted supports of the known type, or supported manually by an operator.

The retraction of the first decks 24 and 25 and of the accessory supporting plates 36 and 37 enable the advancement of the blank 21 toward the opposite side 10b of the machine 10.

At the same time as, or following, the advancement of the blank 21 the rotatable bases 40 and 41 rotate through 90°, and the blank 21 is repositioned on the second side 10b, with adapted supports if any, on the assemblies 12 and 13 in such configuration, while at the side 10a of the machine the fourth portion of profile 22 is introduced, as shown by way of example in Figure 6.

Also shown are retractable positioners 50 of the known type.

The rotation of the rotatable bases 40 and 41 ensures that the welding means 20 can now operate on a welding plane arranged 90° with respect to the previous one, and this enables the welding at 45° of the ends of the fourth piece 22 with the corresponding free ends of the second portions 18 and 19.

Meanwhile the first abutments 26 and 27 maintain the same function but in the lateral position, while the second abutments 32 and 33, centrally, receive the long side of the fourth piece 22 in abutment.

Figure 6 schematizes the complete frame 23 with the fourth piece 22 being fixed to the second portions 18 and 19.

The completed frame 23, finished, can be removed from the side 10b manually or with automatic means, such as conveyor belts or systems for loading onto pallets, or the like.

In practice it has been found that the invention fully achieves the intended aim and objects.

In particular, with the invention a machine is provided that enables the operator to work without unusual physical effort in total safety, since the C-shaped blank need not be stored or placed in a storage system, but is made to advance while resting on the machine itself, and completed in relatively very short timescales.

Moreover, with the invention a machine is provided that makes it possible to eliminate the storage system for the blanks, since the frame is completed with a single sequence of operations.

Moreover, with the invention a welding machine with two welding heads for profiles made of plastic material is provided with functionality, efficiency and lifetime not less than those of conventional machines.

Last but not least, with the invention a welding machine with two welding heads for profiles made of plastic material is provided that can be made using known systems and technologies.

The invention, thus conceived, is susceptible of numerous modifications and variations, all of which are within the scope of the appended claims. Moreover, all the details may be replaced with other, technically equivalent elements.

In practice the materials employed, as well as the contingent dimensions and shapes, may be any according to requirements and to the state of the art.

The disclosures in Italian Patent Application No. PD2010A000362 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A welding machine (10) with two welding heads for profiles made of plastic material, of the type comprising a footing (11) which supports two assemblies (12, 13) for the corner welding of profiles made of plastic material, at least one of said assemblies (12, 13) being able to slide on a corresponding guide (14) defined substantially along all of said footing (11),
said machine being **characterized in that** each welding assembly (12, 13) comprises:
- means (15) for the support and positioning of a first portion of profile (16), or cross-member, which is arranged substantially between the two assemblies,
- means (17) for the support and positioning of a second portion of profile, or upright (18, 19), each assembly supporting a corresponding second portion or upright, which is arranged transversely to the first portion (16),
- means (20) for the corner welding of one end (16a, 16b) of said first portion with a corresponding end (18a, 19a) of the respective second portion (18, 19),
- means for their movement being associated with said support and positioning means (15, 17) and being adapted to allowthe linear advancement, without rotation, of a C-shaped blank (21) from one side (10a) of the machine (10) to its opposite side (10b), and the subsequent operations for positioning and welding a fourth portion of profile (22) or second cross-member for closing a quadrangular frame (23),
- said corner welding means (20) being supported by movement means which allow their operation on different vertical welding planes.

2. The machine according to claim 1, **characterized in that** said means (15) for the support and positioning of a first portion (16) are constituted, for each one of the two assemblies (12, 13), by a first movable deck (24, 25), said first movable deck (24, 25) supporting an abutment (26, 27) against which the long side of the first portion of profile (16) is to be arranged.

3. The machine according to the preceding claims, **characterized in that** each first movable deck (24, 25) is arranged so as to slide on a first linear guide (28, 29), which is extended along a direction that is oriented at an angle (A) with respect to a reference plane that is perpendicular to the direction of motion of the assemblies (12, 13) that is defined by the guides (14), said first guide (28, 29) making it possible, with the retraction of said first movable deck (24, 25) from its configuration for a first welding operation, i.e., the welding of the first portion (16) to the two second portions (18, 19), to also obtain a lateral movement of said first movable deck (24, 25).

4. The machine according to the preceding claims, **characterized in that** said means (17) for the support and positioning of a second portion of profile (18, 19) are constituted, for each welding assembly (12, 13), by a second movable deck (30, 31), said second movable deck (30, 31) supporting a second abutment (32, 33), which is oriented at right angles to the first abutments (26, 27) of the first movable decks (24, 25), against which the long side of the corresponding second portion of profile (18, 19) is to be positioned.

5. The machine according to the preceding claims, **characterized in that** said second movable deck (30, 31) is moved, in a direction which is substantially parallel to the direction defined by the guides (14), by a corresponding actuator (34, 35).

6. The machine according to the preceding claims, **characterized in that** said second movable deck (30, 31) slides on an underlying plate for supporting accessories (36, 37), which in addition to supporting the second movable deck also supports the welding means (20).

7. The machine according to the preceding claim, **characterized in that** each one of the accessory supporting plates (36, 37) is arranged so as to perform a translational motion on a corresponding second linear guide (38, 39), which is extended along a direction which is oriented at a second angle (B), which is greater than said first angle (A), with respect to a reference plane that is perpendicular to the direction of motion of the assemblies (12, 13) that is defined by the guides (14).

8. The machine according to the preceding claims, **characterized in that** said first guides (28, 29) for the first movable decks (24, 25) and the second guides (38, 39) for the accessory supporting plates (36, 37) are fixed to a rotatable base (40, 41), said rotatable bases (40, 41) being in turn coupled rotatably to a corresponding fixed base (42, 43).

9. The machine according to the preceding claims, **characterized in that** said movement means for said support and positioning means (15, 17) adapted to allow the linear advancement, i.e., without rotation, of the C-shaped blank (21), and the subsequent operations for the positioning and welding of a fourth portion of profile (22) to complete a frame (23) are constituted by means (44) for the rotation of the rotatable bases (40, 41) with respect to the fixed bases (42, 43).

10. The machine according to the preceding claims, **characterized in that** said means (44) for rotation comprise, for each rotatable base (40, 41), a lever (45) for the rotation of a pivot (46), which is fixed on the opposite side with respect to said rotatable base (40, 41), an antifriction plate (48) being interposed between said rotatable base and the corresponding fixed base, said lever (45) being rotatable either manually or by way of an actuator (47).

11. The machine according to the preceding claims, **characterized in that** said movement means for the corner welding means (20) which allow their operation on different vertical welding planes are constituted by the rotation means (44) themselves, which together with the rotatable bases (40, 41) also turn the accessory supporting plates (36, 37) and the welding means (20) supported by the latter.
